# EUROPEAN PATENT SPECIFICATION

(11) **EP 3 909 439 B1**
(45) Date of publication and mention of the grant of the patent: **22.04.2026**
(21) Application number: 21172950.4
(22) Date of filing: 10.05.2021
(51) Int. Cl.: A24C 5/32, A24C 5/34, A24C 5/35, B65G 47/51

(54) **UNIT FOR PICKING UP AND FORWARDING ROD-SHAPED ARTICLES OF THE TOBACCO INDUSTRY**
EINHEIT ZUM AUFNEHMEN UND WEITERGEBEN VON STABFÖRMIGEN ARTIKELN DER TABAKINDUSTRIE
UNITÉ DE RAMASSAGE ET DE TRANSPORT DES ARTICLES EN FORME DE BARRE DE L'INDUSTRIE DU TABAC

(30) Priority: 12.05.2020 IT 202000010624
(43) Date of publication of application: 17.11.2021
(73) Proprietor: G.D S.p.A., 40133 Bologna (IT)
(72) Inventor: SALVADEO, Daniele, BOLOGNA (IT); BENNI, Gabriele, BOLOGNA (IT); GAMBERINI, Giuliano, BOLOGNA (IT)
(74) Representative: Bianciardi, Ezio

(56) References cited:
- DE-A1- 2 618 905
- GB-A- 1 434 421
- GB-A- 2 447 779
- US-A- 3 151 728
- US-A- 4 056 916

## Description

This invention relates to a unit and a method for picking up and forwarding rod-shaped articles of the tobacco industry.

The term "rod-shaped articles" is used to denote finished products or semi-products having a longitudinal axis of extension and applicable in the technical field of smoking articles and related fields. By way of example, in the context of this invention (and according to a non-exhaustive list), cigarettes of various different kinds, cigars, cigarillos and the like may be considered as finished products and cigarette rod segments and/or filter segments (whether single or composite) may be considered as semi-products.

As is known, in the field of the production of rod-shaped articles, it may be necessary to perform inspections regarding the quality or state of the article. In other words, during the production of these articles, it may be necessary to perform inspections on a limited number of articles.

For example, in the case of specific parts of the production process, it is necessary to check that each part of the process meets production and quality requirements. This type of inspection is, for example, carried out by cameras or other sensors which perform in-process checks while the articles are moving.

For example, document DE2618905 discloses a unit for transversally feeding a sequence of rod-shaped articles where the articles are individually conveyed and temporarily stored by means of a dynamic linear conveyor in the form of two parallel branches of linear conveyors and a linearly movable carrying wheel.

From document US3151728 a rotary conveyor converger is known, which provides for conveying rod-shaped articles in a row through respective conduits so that, after the articles are received from a double, mirrored line, the articles are rotated so that the final arrangement is a single stream of articles.

Document GB1434421 discloses a unit for storing rod-shaped articles which are fed in an ordered succession by a maker machine and selectively fed into a respective cell by means of a movable tape conveyor.

Document US4056916 discloses a compensating store device for cigarettes, arranged between a maker machine and a packer machine, having a cylinder intermittently rotating about a vertical axis and radial compartments for storing respective piles of single articles one above the other.

Document GB2447779 discloses a group forming apparatus employing an inserting wheel equipped with radial slots and movable to sequentially convey single packets from a row and to pile the packets one upon the other into an exit channel.

Regrettably, these prior art solutions have the disadvantage of being very complex and expensive since the readings must be taken while the articles are moving at high speed in the machines. Moreover, the specific inspection devices installed on the line along which the articles are fed occupy a certain amount of space, which may make it difficult to access the mechanical components of the machine or which, on account of the fragility of the inspection devices, may expose the inspection devices themselves to the risk of damage.

Another disadvantage is that, for operational reasons, the inspection devices check each single article and are therefore redundant in cases where inspections on limited batches of articles are sufficient.

In this context, the technical purpose which forms the basis of this invention is to propose a unit and a method for picking up and forwarding rod-shaped articles of the tobacco industry to overcome the above mentioned drawbacks of the prior art.

More specifically, the aim of this invention is to provide a simple and inexpensive unit and method for picking up and forwarding rod-shaped articles of the tobacco industry.

Another aim of this invention is to provide a unit and a method for picking up and forwarding rod-shaped articles of the tobacco industry which allow inspections to be performed on limited samples of products, having in particular a configuration that is optimized for this function.

The technical purpose indicated and the aim specified are substantially achieved by a unit and a method for picking up and forwarding rod-shaped articles of the tobacco industry comprising the technical features set out in the accompanying claims.

According to the invention, reference is made to a unit for picking up and forwarding rod-shaped articles of the tobacco industry and comprising a pickup conveyor configured to pick up a succession of articles from an ordered flow of rod-shaped articles of the tobacco industry and a conveyor buffer located downstream of the pickup conveyor and configured to receive the succession of articles from the pickup conveyor and to store the articles in at least one ordered succession where, preferably, each article is in contact with at least one other adjacent article. The unit is also provided with a release device associated with the conveyor buffer and configured to release each article individually and in commanded manner from the succession of articles disposed in the conveyor buffer and with a forwarding device located downstream of the release device and configured to receive single articles from the release device and to send the single articles to an inspection and/or processing station, for example, for storage, recycling or other purposes.

The expression "in commanded manner" is used, more specifically, to mean that the release device is able to command each release of a single article automatically or manually as a function of parameters such as the following: a settable rate; detected expulsion of the article just released; operating parameters of the unit (speed, size, etc.), parameters of units or devices connected to the unit (for example, the inspection time needed by the inspection device which receives the single articles released).

The expression "individually" on the other hand, is used to mean that the release unit releases the articles one by one.

Preferably, the articles are picked up in the same ordered succession in which they were in the ordered flow of articles. In other words, the articles are picked up, uninterruptedly and consecutively articles until a group of a predetermined number of articles is formed.

Advantageously, the unit allows separating the individual articles of the succession of articles picked up from the ordered flow and sending them one at a time to the inspection or processing station that follows. Advantageously, the unit allows making an ordered flow of the succession of articles so as to ensure that the first article into the unit is also the first article out of the unit.

Another advantage of the proposed solution is that keeping the sequence of singularized articles makes it possible to keep track of a match between each article sent to the inspection/processing unit and the respective position that the same article had in the ordered flow, thus allowing precise tracing of the cause of a defect and/or the position of the machine zone where the defect found during inspection was produced.

This invention also proposes a method for picking up and forwarding rod-shaped articles of the tobacco industry, preferably implemented by a unit of the kind described above and comprising the following steps:
- preparing an ordered flow of rod-shaped articles of the tobacco industry advancing transversely to their longitudinal axes;
- picking up an ordered succession of articles from the ordered flow, specifically a predetermined number of articles, preferably consecutive;
- temporarily feeding the ordered succession to a conveyor buffer at an infeed section of the conveyor buffer;
- sequentially releasing from the conveyor buffer the single article furthest downstream in the succession at an outfeed section of the conveyor buffer and retaining the rest of the articles in the conveyor buffer;
- sending the single articles released from the conveyor buffer to an inspection and/or processing station;
wherein between two successive steps of releasing there is a step of feeding the rest of the articles in the conveyor buffer by a quantity substantially corresponding to one article.

In other words, the conveyor buffer receives the sequence of article at a first rate determined by the feed rate of the articles in the ordered flow and releases single articles at a second rate based on a commanded release rate. The articles in the conveyor buffer preferably adopt an intermittent feed rate defined by the (second) release rate.

Advantageously, the method allows separating the individual articles picked up from the ordered flow and sending them one at a time to a respective inspection (and/or processing) station.

Another advantage of the method is that it allows obtaining an ordered flow of the succession of articles so as to ensure that the first article to enter the unit is also the first article to exit the unit (that is to say, that the first article to be picked up is the first article sent out of the unit, according to FIFO logic).

Further features and advantages of the invention are more apparent in the indicative, hence non-limiting, description of a preferred but non-exclusive embodiment of a unit and a method for picking up and forwarding rod-shaped articles of the tobacco industry, as illustrated in the accompanying drawings, in which:
- Figure 1 is a schematic view of a unit of this invention, with some parts omitted to better illustrate others;
- Figure 2 is a side view of the unit of this invention;
- Figures 3A-3D schematically represent a sequence of steps of the method of this invention;
- Figure 4 is a schematic representation of some of the components of the unit of Figures 1 and 2;
- Figure 5 is a view of the unit of Figure 1 in perspective and in cross section through a vertical plane.

With reference to the accompanying drawings, the numeral 1 denotes in its entirety a unit for picking up and forwarding rod-shaped articles of the tobacco industry according to the invention.

The term "rod-shaped articles" A is used to denote finished products or semi-products having a longitudinal axis of extension and, more specifically, applicable in the field of smoking articles and related fields. By way of example, in the context of this invention (and according to a non-exhaustive list), cigarettes of various different kinds, cigars, cigarillos and the like may be considered as finished products and cigarette rod segments and/or filter segments (whether single or composite) may be considered as semi-products.

The unit 1 comprises a pickup conveyor 2 configured to pick up a succession of articles A from an ordered flow F of rod-shaped articles A of the tobacco industry. In other words, the pickup conveyor 2 is configured to pick up from a feed path of the articles A (for example, defined by a succession of drums of a filter tip attachment machine) a succession of rod-shaped articles A advancing in orderly fashion. The ordered flow F may be defined, for example, by receiving seats, specifically suction seats, of a succession of conveyors (such as, for example, a succession of drums) or of a single conveyor (such as, for example, a conveyor belt). Preferably, as shown in the accompanying drawings, the pickup conveyor 2 is made in the form of a pickup drum provided with suctions seats 2a for holding the articles A picked up from the ordered flow F.

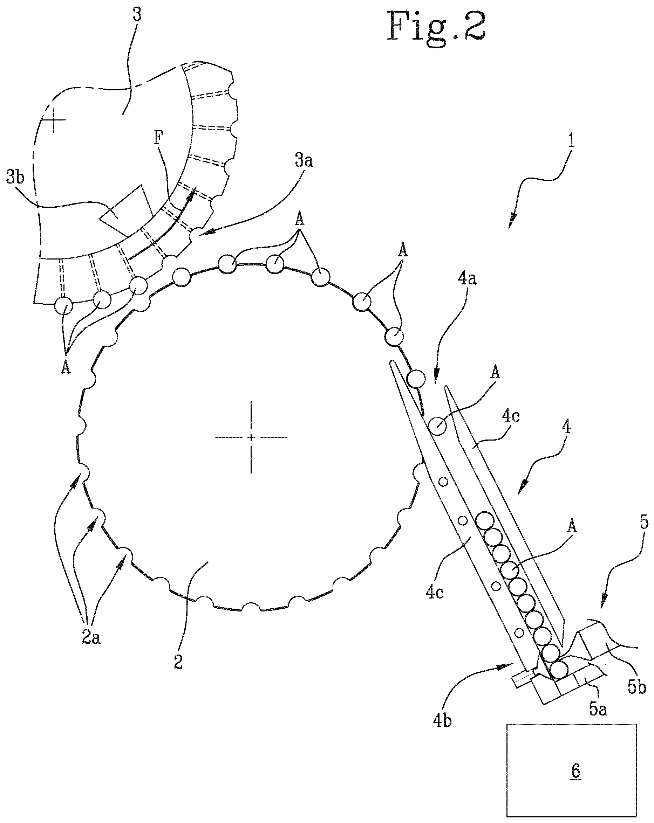

Preferably, the unit 1 also includes an intermediate conveyor 3 (Figure 2) provided with suction seats 3a and defining a stretch of the feed path of the ordered flow F of articles A. More specifically, the intermediate conveyor 3 is made in the form of a drum, provided with suction seats and configured, especially for the purposes of the invention, as described below. Other embodiments are possible according to the devices that define the feed path of the ordered flow F.

The pickup conveyor 2 is positioned to be tangent to the intermediate conveyor 3 at a pickup zone. In order to facilitate releasing the articles at the pickup zone, the intermediate conveyor 3 has a suction shutoff device 3b operating in the pickup zone to turn off in commanded manner the suction in the suction seats 3a of the intermediate conveyor 3 so as to allow the pickup conveyor 2 to move the articles A away.

Preferably, the shutoff device 3b is configured to be placed between the specific suction seats 3a and a suction source (or chamber), thereby selectively isolating the suction seat 3a which is at that moment positioned in the pickup zone, in the zone where the conveyors 2, 3 are tangent to each other. That way, the article A comes away from its suction seat 3a and is received by the suction seat 2a of the pickup conveyor 2.

In an embodiment, the shutoff device 3b is configured in the form of a cutoff element disposed in the pickup zone, inside the mantle of the intermediate conveyor 3, to isolate the suction seat 3a from the related suction chamber (or suction duct).

In a different embodiment, the shutoff device 3b is configured to generate a flow in a direction opposite to the suction flow, thereby a generating a pressurized air flow which allows separating the article "A" from the suction seat 3a so as to send it to the suction seat 2a of the pickup conveyor 2. Preferably, the pickup conveyor 2 is in turn provided with retaining means, preferably in the form of suction seats, for securely holding the articles A it receives from the suction seats 3a of the intermediate conveyor 3.

The pickup conveyor 2 is configured to pick up each article A of the succession of articles at a predetermined rate and/or by predetermined number. For example, the pickup conveyor 2 may be configured to pick up a sample (that is, one article A) every two or three articles A which pass through the pickup zone, or any other number that meets the requirements of the moment. Preferably, the pickup conveyor 2 picks up all the consecutive articles for a predetermined length of time, so as to draw from the ordered flow F of articles A a predetermined number of articles (settable by an operator or by a control unit).

The unit 1 also comprises a conveyor buffer 4 located downstream of the pickup conveyor 2 and configured to receive the succession of articles A from the pickup conveyor 2 and to store the articles A in at least one ordered succession where, preferably, each article A is in contact with at least one other adjacent article A.

In a different embodiment, not illustrated, each article A might also not be in contact with at least one other adjacent article A, for example, if the conveyor buffer is divided into seats disposed in succession.

The conveyor buffer 4 extends between an infeed section 4a, confronting the pickup conveyor 2, and an opposite outfeed section 4b. The ordered succession of articles A is defined along a direction which leads from the infeed section 4a to the outfeed section 4b.

The pickup conveyor 2 thus picks up the articles A from the ordered flow F and transports them to the conveyor buffer 4, where they are placed in the infeed section 4a.

In order to separate the articles A from the pickup conveyor 2, made in the form of a drum, the infeed section 4a of the conveyor buffer 4 has a "forked" structure in which two pickup teeth are positioned on opposite sides of the pickup conveyor 2 so as to progressively detach the articles A from the pickup conveyor 2 (Figure 2).

Preferably, the conveyor buffer 4 is made in the form of a chute (as shown in the accompanying drawings) configured to convey the succession of articles A received from the pickup conveyor 2 to the outfeed section 4b by gravity, specifically along a sliding direction which makes an acute angle with the vertical and which is preferably rectilinear.

In an embodiment, the conveyor buffer 4 comprises a lower transporting conveyor, configured to transport the succession of articles A to the outfeed section 4b and made, for example, in the form of a conveyor belt. The lower conveyor may be used both with a conveyor buffer 4 made in the form of a chute and with other embodiments of it.

Preferably, other embodiments of the conveyor buffer 4 are possible, depending on constructional requirements or on the particular positon of the unit 1 relative to the machine that defines the ordered flow F of articles A, provided the configuration includes an infeed section 4a and an outfeed section 4b, with a buffer section between them.

The conveyor buffer 4 is provided with parallel guide walls 4 defining at least one guide groove for a respective succession of articles A. The guide groove thus defined preferably has a constant thickness such as to dispose the articles A in a single row parallel to the guide walls 4c (in a stacked configuration if the conveyor buffer 4 is in the form of a chute). Preferably, the guide groove is just a little wider than the transverse dimension of the articles A (the transverse dimension being, more specifically, the diameter of the articles A).

The conveyor buffer 4 is configured to release the articles A in the same order in which the articles were received from the pickup conveyor 2. Since the pickup conveyor 2 is configured to transfer the articles to the conveyor buffer 4 in the same order the articles A had in the ordered flow before being picked up, it follows that the articles A are stored in the buffer in the same order in which they were disposed when advancing in the ordered flow F.

Thus, the conveyor buffer 4 defines a FIFO (first in, first out) flow of the articles A inside the conveyor buffer 4 itself, where the first article A picked up is the first article A to exit the unit 1. In other words, the conveyor buffer 4 is a buffer in which the articles A stop and wait to be released, specifically one by one. That way, it is possible to monitor and know at all times the order and position of the single articles after they have been removed from the process flow.

Advantageously, the guide groove defined by the conveyor buffer 4 allows ensuring the FIFO flow of the articles A. More specifically, the distance between the guide walls 4c (which is just a little larger than the transverse dimension, that is, the diameter, of the articles A) allows ensuring that the first article that enters the conveyor buffer 4 is the first to exit, preventing the articles from passing each other and exchanging positions in uncontrolled manner.

The unit 1 also comprises a release device 5 associated with the conveyor buffer 4 and configured to release each article A individually and in a commanded manner from the succession of articles A disposed in the conveyor buffer 4. The release device 5 operates on the outfeed section 4b of the conveyor buffer 4, being in particular disposed in proximity to the outfeed section 4b, so as to operate on the succession of articles A to release them one by one from the conveyor buffer 4.

The release device 5 preferably comprises a first stop member 5a and a second stop member 5b. The two stop members 5a and 5b are disposed at the outfeed section 4b to intercept the articles A as they advance towards the outfeed section 4b itself. The first stop member 5a is disposed downstream of the second stop member 5b at a distance such that only one article can be placed between the two stop members 5a and 5b. In other words, the first and the second stop member 5a and 5 b are spaced apart by a distance equal to (or slightly greater than) the transverse dimension (that is, the diameter, of the articles A). The stop members 5a and 5b can be operated independently of one another so the single articles A can be released from the conveyor buffer 4 in controlled manner. The first stop member 5a is configured to receive the succession of articles A in abutment against it, intercepting the articles A as they advance and thereby preventing them from flowing out of the conveyor buffer 4 all at once in uncontrolled manner.

The second stop member 5b, on the other hand, is configured to be interposed between an article A resting in abutment against the first stop member 5a and the adjacent article A. In other words, the second stop member 5b is configured to allow the article A which is in abutment against the first stop member 5a to be separated from the article following immediately after it.

At least one of the stop members (5a or 5b) comprises a movable wall 5c configured to adopt a stop position, where the movable wall 5c prevents the articles A upstream of the release device 5 (that is, upstream of the conveyor buffer 4) from advancing. In other words, at that position, the stop member 5a or 5b is active.

The movable wall 5c is also configured to adopt a disengaged position, where it allows the articles A to move along the conveyor buffer 4. In other words, at that position, the stop member 5a or 5b is inactive.

Preferably, as shown in the accompanying drawings, the stop members 5a and 5b are each provided with a respective movable wall 5c.

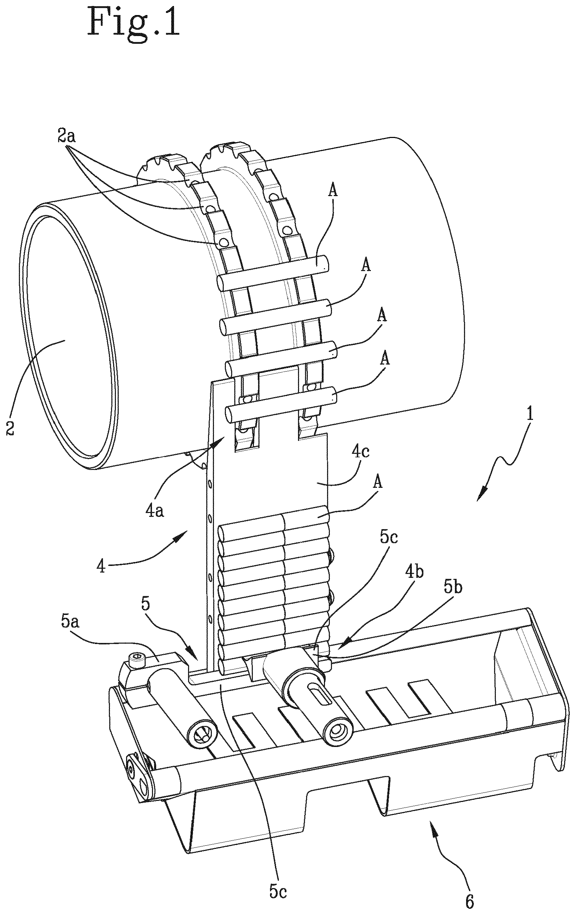

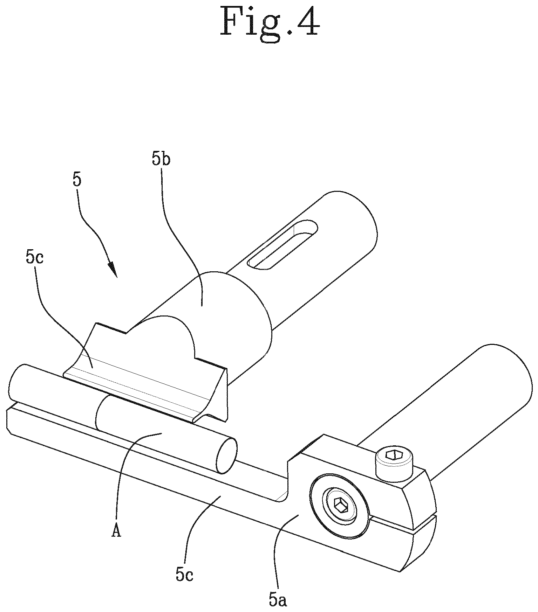

As shown in Figure 4, for example, the movable wall 5c of the first stop member 5a has an elongate shape suitable for at least partly occluding the outfeed section 4b of the conveyor buffer 4, preferably, entirely occluding it (as shown, for example in Figure 1), when in the stopping configuration. The movable wall 5c of the first stop member 5a is movable away from the outfeed section 4b to allow one article A to pass.

Also, as shown in Figure 4, the movable wall 5c of the second stop member 5b has a substantially flat shape suitable for insertion between two adjacent articles A so that the article A upstream is stopped, while the article A downstream is released by the first stop member 5a.

The two stop members 5a and 5b are preferably settable to the respective stop positions in non-simultaneous manner, specifically alternately at a constant or settable rate. That way, the stop members 5a and 5b are able to release the articles A one by one at preset time intervals.

Described below is a procedure whereby the stop members 5a and 5b described above allow the articles A to be stored and then released one by one.

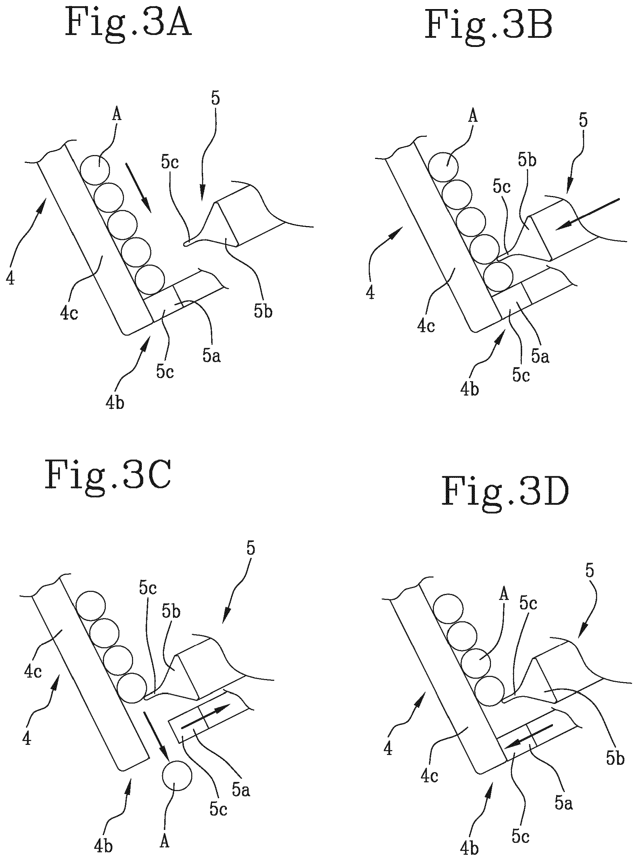

Initially, as shown in Figure 3A, the first stop member 5a is positioned in such a way that its movable wall 5c is at the stop position, while the movable wall 5c of the second stop member 5a is at the disengaged position. That way, the articles A are free to slide in the conveyor buffer 4 until the first article A stops against the movable wall 5c of the first stop member 5a, thereby interrupting the motion of the articles A along the conveyor buffer 4. In other words, the train of articles A defined in the conveyor buffer 4 stops against the first stop member 5a so that the first article to have been picked up is in contact with the first stop member 5a and the rest are against one another. At this point, as shown in Figure 3B, the second stop member 5b is activated so that its movable wall 5c separates the first article A from the article A immediately following it, hence from all the other articles A present in the conveyor buffer 4 (in this configuration, the second stop member 5b need not come into contact with one or both of the articles but it is sufficient for the second stop member 5b to intercept the movement of the article following, which is thus prevented from moving when the article before it is released). Next, the first stop member 5a is activated to open the outfeed section 4b so that the single article A, separated from the rest of the succession (Figure 3C), is released from the conveyor buffer 4. At this point, once the article A has been released, the first stop member 5a returns to the stop position (Figure 3D and the second stop member 5b then returns to the disengaged position (Figure 3A) and the cycle described above to release each article A individually from the conveyor buffer 4 is repeated. Preferably, the two stop members 5a and 5b can be commanded by pneumatic drive. Preferably, the two stop members 5a and 5b can be commanded by motor drive.

Preferably, also, at least one of the two stop members 5a and 5b, preferably both of them, is/are movable in a direction transverse (perpendicular) to the feed direction of the articles A in the guide groove defined by the conveyor buffer 4 and transverse (perpendicular) also to the longitudinal axis of the articles A.

The unit 1 is also provided with a forwarding device 6, located downstream of the release device 5 (in the proximity of the outfeed section 4b of the conveyor buffer 4) and configured to receive the single articles A from the release device 5 and to send the single articles A to an inspection and/or processing station or to a different working station.

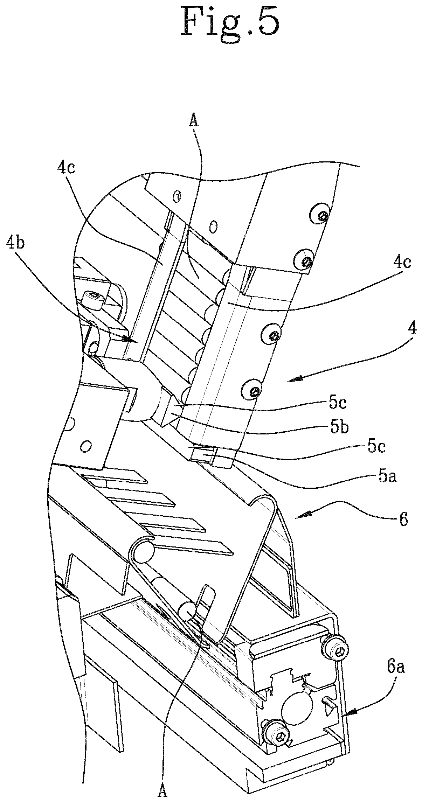

As shown, for example, in Figure 1 or Figure 5, the forwarding device 6 comprises a chute provided with one or more inclined guide walls and, downstream of that, a pneumatic transfer device 6a configured to feed the rod-shaped articles A longitudinally.

Preferably, the pickup conveyor 2, the conveyor buffer 4 and the release device 5 are configured to move the rod-shaped articles A transversely until they reach the forwarding device 6, where axial movement is imparted to the articles A.

Preferably, the unit 1 may be provided with a plurality of presence sensors disposed along the path followed by the articles A, which is defined by the unit itself, so as to monitor the exact location of each article in the unit 1.

Advantageously, the sensors allow the order and position of the individual articles A after they have been extracted from the process flow to be known at all times, thus providing a control system whereby any malfunction that might occur along the machine that defines the ordered flow F of articles A can be traced in time and space.

Advantageously, the unit 1 described above is capable of sending to an inspection and/or processing station an ordered, sequential and singularized sample of articles A picked up from the flow F of a machine. Advantageously, the unit 1 described above is capable of effectively singularizing the sequence of articles A. In other words, the unit 1 allows separating the individual articles of the succession of articles picked up from the ordered flow, having a fixed feed rate, and to send them one at a time to a respective inspection (and/or processing) station having a different process feed rate, specifically a slower rate.

Advantageously, the unit 1 allows making an ordered flow of the succession of articles A so as to ensure that the first article A into the unit 1 is also the first article A out of the unit.

Another advantage of the proposed solution is that the articles A thus singularized and ordered are efficiently controlled, in particular at a control speed that is suitably selected independently of (and lower than) the line speed of the articles so as to obtain precise data as to where and/or when a malfunction occurred.

Also an object of this invention is a method for picking up and forwarding rod-shaped articles of the tobacco industry. The method is preferably implemented by a unit 1 according to one or more of the embodiments described in the foregoing.

The method comprises the step of preparing an ordered flow F of articles A advancing transversely to their longitudinal axes. Preferably, the articles A are extracted from an ordered flow F defined by a succession of conveyors in a machine for processing the articles A, such as a filter tip attachment machine, for example.

The method also comprises picking up an ordered succession of articles A from the ordered flow F and temporarily feeding the ordered succession to a conveyor buffer 4 at an infeed section 4a of the conveyor buffer 4. The step of picking up can be performed using a pickup conveyor 2 and, preferably, an intermediate conveyor 3 provided with suction seats 3a and with a shutoff device 3b for interrupting suction so that an article A present in a suction seat 3a can be separated and released onto the pickup conveyor 2.

The method also comprises sequentially releasing from the conveyor buffer 4 the single article A furthest downstream in the succession at an outfeed section 4b of the conveyor buffer 4. This step is accomplished by retaining the rest of the articles A in the conveyor buffer 4.

Between two successive steps of releasing there is a step of feeding the rest of the articles A in the conveyor buffer 4 by a quantity substantially corresponding to one article A.

This step is preferably carried out by a release device 5 of the type described in the foregoing, provided with a first stop member 5a and a second stop member 5b, as described above (with reference to Figures 3A-3D).

Preferably, the step of releasing is carried out at a different rate, specifically a lower rate, than the rate at which the articles are picked up from the ordered flow F of articles A.

Preferably, the step of releasing is accomplished by moving the articles A transversely to their longitudinal axes.

Lastly, the method comprises a step of sending the single articles A released from the conveyor buffer 4 to an inspection and/or processing station.

Preferably, the step of sending the articles A to the inspection and/or processing station is carried out by moving the articles A along their longitudinal axes, specifically by means of a pneumatic pushing device 6a. Advantageously, the method allows separating the individual articles A picked up from the ordered flow F and sending them one at a time to a respective inspection (and/or processing) station.

Another advantage of the method is that it allows obtaining an ordered flow of the succession of articles A so as to ensure that the first article A to enter the unit 1 is also the first article to exit the unit 1 (that is to say, that the first article A to be picked up is the first article A sent out).

In an embodiment not illustrated, the conveyor buffer 4 may be made in such a way as to store the articles A in two or more ordered successions, for example, on top of one another (where each succession is as described in the foregoing), separated by a dividing wall to prevent the articles of the different successions from mixing.

This invention (unit 1 and method) allows overcoming the disadvantages of the prior art.

In effect, the invention ensures machine service continuity, by picking up the desired sequence of articles A and delivering it to the forwarding device 6, one article at a time in the same order, thus making it possible to monitor and constantly know the order and location of the individual articles after they have been extracted from the process flow, so that any defects found during inspection can be precisely traced.

## Claims

1. A unit (1) for picking up and forwarding rod-shaped articles (A) of the tobacco industry, comprising:
- a pickup conveyor (2) configured to pick up a succession of articles (A) from an ordered flow (F) of rod-shaped articles (A) of the tobacco industry;
- a conveyor buffer (4) located downstream of the pickup conveyor (2) and configured to receive the succession of articles (A) from the pickup conveyor (2) and to store the articles (A) in at least one ordered succession where, preferably, each article (A) is in contact with at least one other adjacent article (A);
- a release device (5) associated with the conveyor buffer (4) and configured to release each article (A) individually and in a commanded manner from the succession of articles (A) disposed in the conveyor buffer (4);
- a forwarding device (6), located downstream of the release device (5) and configured to receive single articles (A) from the release device (6) and to send the single articles (A) to an inspection and/or processing station.

2. The unit (1) according to claim 1, wherein the conveyor buffer (4) extends between an infeed section (4a) facing the pickup conveyor (2) and an outfeed section (4b) on which the release device (6) operates, and wherein the at least one ordered succession of articles (A) is defined along a direction which leads from the infeed section (4a) to the outfeed section (4b).

3. The unit (1) according to claim 2, wherein the conveyor buffer (4) is made in the form of a chute configured to convey to the outfeed section (4b) by gravity the succession of articles (A) received from the pickup conveyor (2).

4. The unit (1) according to claim 2, wherein the conveyor buffer (4) comprises a lower transporting conveyor, preferably a conveyor belt, configured to transport the succession of articles (A) to the outfeed section (4b).

5. The unit (1) according to one or more of claims 2 to 4, wherein the release device (5) comprises a first and second stop member (5a, 5b), disposed at the outfeed section (4b) to interfere with the articles (A) being fed to the outfeed section (4b), where the first stop member (5a) is disposed downstream of the second stop member (5b), specifically at a distance such that only one article (A) can be placed between the two stop members (5a, 5b), and wherein the stop members (5a, 5b) are operable independently so that single articles (A) can be released from the conveyor buffer (4) in a controlled manner.

6. The unit (1) according to claim 5, wherein at least one of the stop members (5a, 5b), preferably each stop member (5a, 5b), comprises a movable wall (5c) configured to adopt a stop position, where it prevents feeding of the articles (A) disposed upstream, and a disengaged position, where it allows feeding of the articles (A) along the conveyor buffer (4).

7. The unit (1) according to claim 6, wherein the two stop members (5a, 5b) can be set to the respective stop position in non-simultaneous manner, preferably alternately at a constant rate.

8. The unit (1) according to one or more of the preceding claims, wherein the conveyor buffer (4) is configured to release the articles (A) in the same order in which the articles (A) were received from the pickup conveyor (2), and wherein the pickup conveyor (2) is configured to transfer the articles (A) to the conveyor buffer (4) in the same order followed by the articles (A) in the ordered flow (F) of articles (A) prior to being picked up.

9. The unit (1) according to one or more of the preceding claims, wherein the conveyor buffer (4) has parallel guide walls (4c) defining at least one guide channel of preferably constant thickness for a respective succession of articles (A), and wherein the thickness is such as to allow the articles (A) to be disposed in a single row parallel to the guide walls (4c) and preferably approximating by excess a transverse dimension - or diameter
- of the articles (A).

10. The unit (1) according to one or more of the preceding claims, further comprising an intermediate conveyor (3), specifically in the form of a drum, provided with suction seats (3a) and defining a stretch of the feed path of the ordered flow (F) of articles (A), wherein the pickup conveyor (2) is disposed at a position tangent to the intermediate conveyor (3) at a pickup zone and wherein the intermediate conveyor (3) is provided with a suction shutoff device (3b) operating in the pickup zone to turn off in commanded manner the suction in the suction seats (3a) of the intermediate (3) in the pickup zone.

11. The unit (1) according to one or more of the preceding claims, wherein the forwarding device (6) comprises a pneumatic transfer device (6a) configured for longitudinally feeding the rod-shaped articles (A).

12. The unit (1) according to one or more of the preceding claims, wherein the pickup conveyor (2), the conveyor buffer (4) and the release device (5) are configured to move the rod-shaped articles (A) transversely.

13. A method for picking up and forwarding rod-shaped articles (A) of the tobacco industry, preferably implemented by a unit (1) according to one or more of the preceding claims, comprising the following steps:
- preparing an ordered flow (F) of rod-shaped articles (A) of the tobacco industry advancing transversely to their longitudinal axes;
- picking up an ordered succession of articles (A) from the ordered flow (F);
- temporarily feeding the ordered succession to a conveyor buffer (4) at an infeed section (4a) of the conveyor buffer (4);
- sequentially releasing from the conveyor buffer (4), in a commanded manner, the single article (A) furthest downstream in the succession at an outfeed section (4b) of the conveyor buffer (4) and retaining the rest of the articles (A) in the conveyor buffer (4);
- sending the single articles (A) released from the conveyor buffer (4) to an inspection and/or processing station;
wherein between two successive steps of releasing there is a step of feeding the rest of the articles (A) in the conveyor buffer (4) by a quantity substantially corresponding to one article (A).

14. The method according to claim 13, wherein the step of releasing is carried out at a different rate, specifically a lower rate, than the rate at which the articles (A) are picked up from the ordered flow (F) of articles (A).

15. The method according to claim 13 or 14, wherein the step of releasing is carried out by moving the articles (A) transversely to their longitudinal axes and wherein the step of sending the articles (A) to the inspection and/or processing station is carried out by moving the articles (A) along their longitudinal axes, specifically by means of a pneumatic pushing device (6a).

16. The method according to any of claims 13 to 15, wherein the sequential release step is carried out by automatically or manually commanding each release of a single article from the ordered succession.

## Patentansprüche

1. Einheit (1) zum Aufnehmen und Weitergeben von stabförmigen Artikeln (A) der Tabakindustrie, umfassend:
- einen Aufnahmeförderer (2), der ausgelegt ist, um eine Abfolge von Artikeln (A) aus einem geordneten Strom (F) stabförmiger Artikel (A) der Tabakindustrie aufzunehmen;
- einen Förderpuffer (4), der stromabwärts des Aufnahmeförderers (2) befindlich und ausgelegt ist, um die Abfolge von Artikeln (A) von dem Aufnahmeförderer (2) zu empfangen und die Artikel (A) in mindestens einer geordneten Abfolge zu speichern, wobei vorzugsweise jeder Artikel (A) mit mindestens einem anderen benachbarten Artikel (A) in Kontakt ist;
- eine Freigabevorrichtung (5), die mit dem Förderpuffer (4) assoziiert und ausgelegt ist, um jeden Artikel (A) einzeln und in gesteuerter Weise aus der in dem Förderpuffer (4) angeordneten Abfolge von Artikeln (A) freizugeben;
- eine Weitergabevorrichtung (6), die stromabwärts der Freigabevorrichtung (5) befindlich und ausgelegt ist, um einzelne Artikel (A) von der Freigabevorrichtung (6) zu empfangen und die einzelnen Artikel (A) an eine Inspektions- und/oder Verarbeitungsstation zu senden.

2. Einheit (1) nach Anspruch 1, wobei sich der Förderpuffer (4) zwischen einem dem Aufnahmeförderer (2) zugewandten Einführabschnitt (4a) und einem Austransportabschnitt (4b) erstreckt, auf dem die Freigabevorrichtung (6) arbeitet, und wobei die mindestens eine geordnete Abfolge von Artikeln (A) entlang einer Richtung definiert ist, die von dem Einführabschnitt (4a) zu dem Austransportabschnitt (4b) führt.

3. Einheit (1) nach Anspruch 2, wobei der Förderpuffer (4) in der Form einer Rutsche ausgebildet ist, die ausgelegt ist, um die von dem Aufnahmeförderer (2) empfangene Abfolge von Artikeln (A) per Schwerkraft zu dem Austransportabschnitt (4b) zu fördern.

4. Einheit (1) nach Anspruch 2, wobei der Förderpuffer (4) einen unteren Transportförderer, vorzugsweise ein Förderband, umfasst, der ausgelegt ist, um die Abfolge von Artikeln (A) zu dem Austransportabschnitt (4b) zu transportieren.

5. Einheit (1) nach einem oder mehreren der Ansprüche 2 bis 4, wobei die Freigabevorrichtung (5) ein erstes und ein zweites Stoppelement (5a, 5b) umfasst, die an dem Austransportabschnitt (4b) angeordnet sind, um mit den dem Austransportabschnitt (4b) zugeführten Artikeln (A) zu interferieren, wobei das erste Stoppelement (5a) stromabwärts des zweiten Stoppelements (5b) insbesondere in einem Abstand angeordnet ist, sodass nur jeweils ein Artikel (A) zwischen den beiden Stoppelementen (5a, 5b) platziert werden kann, und wobei die Stoppelemente (5a, 5b) unabhängig betätigbar sind, sodass einzelne Artikel (A) in kontrollierter Weise von dem Förderpuffer (4) freigegeben werden können.

6. Einheit (1) nach Anspruch 5, wobei mindestens eines der Stoppelemente (5a, 5b), vorzugsweise jedes Stoppelement (5a, 5b), eine bewegbare Wand (5c) umfasst, die ausgelegt ist, um eine Stoppposition einzunehmen, in der sie das Zuführen der stromaufwärts angeordneten Artikel (A) verhindert, und eine gelöste Position, in der sie das Zuführen der Artikel (A) entlang des Förderpuffers (4) erlaubt.

7. Einheit (1) nach Anspruch 6, wobei die beiden Stoppelemente (5a, 5b) in der jeweiligen Stoppposition in nicht gleichzeitiger Weise, vorzugsweise abwechselnd mit konstanter Frequenz, eingestellt werden können.

8. Einheit (1) nach einem oder mehreren der vorhergehenden Ansprüche, wobei der Förderpuffer (4) ausgelegt ist, um die Artikel (A) in derselben Reihenfolge, in der die Artikel (A) von dem Aufnahmeförderer (2) empfangen wurden, freizugeben, und wobei der Aufnahmeförderer (2) ausgelegt ist, um die Artikel (A) zu dem Förderpuffer (4) in derselben Reihenfolge, in der die Artikel (A) in dem geordneten Strom (F) von Artikeln angeordnet sind, bevor sie aufgenommen werden, zu transferieren.

9. Einheit (1) nach einem oder mehreren der vorhergehenden Ansprüche, wobei der Förderpuffer (4) parallele Führungswände (4c) aufweist, die mindestens einen Führungskanal definieren, der vorzugsweise eine konstante Dicke für eine jeweilige Abfolge von Artikeln (A) aufweist, und wobei die Dicke derart bemessen ist, dass die Artikel (A) in einer einzigen Reihe parallel zu den Führungswänden (4c) angeordnet werden können, und vorzugsweise eine Querausdehnung - oder einen Durchmesser - aufweist, die bzw. der annähernd größer ist als die bzw. der der Artikel (A).

10. Einheit (1) nach einem oder mehreren der vorhergehenden Ansprüche, ferner umfassend einen Zwischenförderer (3), insbesondere in der Form einer Trommel, der mit Saugsitzen (3a) versehen ist und ein Teilstück des Zuführwegs des geordneten Stroms (F) von Artikeln (A) definiert, wobei der Aufnahmeförderer (2) an einer den Zwischenförderer (3) berührenden Position an einer Aufnahmezone angeordnet ist, und wobei der Zwischenförderer (3) mit einer Saugabschaltvorrichtung (3b) versehen ist, die in der Aufnahmezone arbeitet, um die Ansaugung in den Saugsitzen (3a) des Zwischenförderers (3) in der Aufnahmezone in gesteuerter Weise abzuschalten.

11. Einheit (1) nach einem oder mehreren der vorhergehenden Ansprüche, wobei die Weitergabevorrichtung (6) eine pneumatische Transfervorrichtung (6a) umfasst, die ausgelegt ist, um die stabförmigen Artikel (A) längs zuzuführen.

12. Einheit (1) nach einem oder mehreren der vorhergehenden Ansprüche, wobei der Aufnahmeförderer (2), der Förderpuffer (4) und die Freigabevorrichtung (5) ausgelegt sind, um die stabförmigen Artikel (A) quer zu bewegen.

13. Verfahren zum Aufnehmen und Weitergeben von stabförmigen Artikeln (A) der Tabakindustrie, vorzugsweise umgesetzt durch eine Einheit (1) nach einem oder mehreren der vorhergehenden Ansprüche, das die folgenden Schritte umfasst:
- Vorbereiten eines geordneten Stroms (F) stabförmiger Artikel (A) der Tabakindustrie, die quer zu ihren Längsachsen vorgeschoben werden;
- Aufnehmen einer geordneten Abfolge von Artikeln (A) von dem geordneten Strom (F);
- vorübergehendes Zuführen der geordneten Abfolge zu einem Förderpuffer (4) an einem Einführabschnitt (4a) des Förderpuffers (4);
- sequentielles Freigeben des sich am weitesten stromabwärts befindenden einzelnen Artikels (A) in der Abfolge von dem Förderpuffer (4) in gesteuerter Weise an einem Austransportabschnitt (4b) des Förderpuffers (4) und Zurückhalten der restlichen Artikel (A) in dem Förderpuffer (4);
- Senden der einzelnen, von dem Förderpuffer (4) freigegebenen Artikel (A) an eine Inspektions- und/oder Verarbeitungsstation,
wobei zwischen zwei aufeinanderfolgenden Schritten des Freigebens ein Schritt zum Zuführen der restlichen Artikel (A) in den Förderpuffer (4) in einer Menge, die im Wesentlichen einem Artikel (A) entspricht, stattfindet.

14. Verfahren nach Anspruch 13, wobei der Schritt zum Freigeben mit einer anderen Frequenz, insbesondere einer niedrigeren Frequenz, als der Frequenz, mit der die Artikel aus dem geordneten Strom (F) von Artikeln (A) aufgenommen werden, durchgeführt wird.

15. Verfahren nach Anspruch 13 oder 14, wobei der Schritt zum Freigeben durchgeführt wird, indem die Artikel (A) quer zu ihren Längsachsen bewegt werden, und wobei der Schritt zum Senden der Artikel (A) zu der Inspektions- und/oder Verarbeitungsstation durchgeführt wird, indem die Artikel (A) entlang ihrer Längsachsen bewegt werden, insbesondere mittels einer pneumatischen Schubvorrichtung (6a).

16. Verfahren nach einem der Ansprüche 13 bis 15, wobei der Schritt zum sequentiellen Freigeben durchgeführt wird, indem jede Freigabe eines einzelnen Artikels aus der geordneten Abfolge automatisch oder manuell gesteuert wird.

## Revendications

1. Unité (1) de ramassage et de transport d'articles en forme de tige (A) de l'industrie du tabac, comprenant :
- un convoyeur de ramassage (2) configuré pour ramasser une succession d'articles (A) à partir d'un flux ordonné (F) d'articles en forme de tige (A) de l'industrie du tabac ;
- un tampon de convoyeur (4) situé en aval du convoyeur de ramassage (2) et configuré pour recevoir la succession d'articles (A) du convoyeur de ramassage (2) et pour stocker les articles (A) dans au moins une succession ordonnée où, de préférence, chaque article (A) est en contact avec au moins un autre article adjacent (A) ;
- un dispositif de libération (5) associé au tampon de convoyeur (4) et configuré pour libérer chaque article (A) individuellement et de manière commandée à partir de la succession d'articles (A) disposés dans le tampon de convoyeur (4) ;
- un dispositif de transport (6), situé en aval du dispositif de libération (5) et configuré pour recevoir des articles unitaires (A) provenant du dispositif de libération (6) et pour envoyer les articles unitaires (A) à un poste d'inspection et/ou de traitement.

2. Unité (1) selon la revendication 1, dans laquelle le tampon de convoyeur (4) s'étend entre une section d'entrée (4a) faisant face au convoyeur de ramassage (2) et une section de sortie (4b) sur laquelle le dispositif de libération (6) fonctionne, et dans laquelle la au moins une succession ordonnée d'articles (A) est définie le long d'une direction qui mène de la section d'entrée (4a) à la section de sortie (4b).

3. Unité (1) selon la revendication 2, dans laquelle le tampon de convoyeur (4) est réalisé sous la forme d'une goulotte configurée pour convoyer vers la section de sortie (4b) par gravité la succession d'articles (A) reçus du convoyeur de ramassage (2).

4. Unité (1) selon la revendication 2, dans laquelle le tampon de convoyeur (4) comprend un convoyeur de transport inférieur, de préférence un tapis de convoyeur, configuré pour transporter la succession d'articles (A) vers la section de sortie (4b).

5. Unité (1) selon une ou plusieurs des revendications 2 à 4, dans laquelle le dispositif de libération (5) comprend un premier et un second élément d'arrêt (5a, 5b), disposés au niveau de la section de sortie (4b) pour interférer avec les articles (A) étant alimentés vers la section de sortie (4b), où le premier élément d'arrêt (5a) est disposé en aval du second élément d'arrêt (5b), spécifiquement à une distance telle que seul un article (A) peut être placé entre les deux éléments d'arrêt (5a, 5b), et dans laquelle les éléments d'arrêt (5a, 5b) peuvent fonctionner indépendamment de sorte que des articles unitaires (A) peuvent être libérés du tampon de convoyeur (4) d'une manière contrôlée.

6. Unité (1) selon la revendication 5, dans laquelle au moins l'un des éléments d'arrêt (5a, 5b), de préférence chaque élément d'arrêt (5a, 5b), comprend une paroi mobile (5c) configurée pour adopter une position d'arrêt, où elle empêche l'alimentation des articles (A) disposés en amont, et une position désengagée, où elle permet l'alimentation des articles (A) le long du tampon de convoyeur (4).

7. Unité (1) selon la revendication 6, dans laquelle les deux éléments d'arrêt (5a, 5b) peuvent être réglés dans la position d'arrêt respective de manière non simultanée, de préférence alternativement à une cadence constante.

8. Unité (1) selon une ou plusieurs des revendications précédentes, dans laquelle le tampon de convoyeur (4) est configuré pour libérer les articles (A) dans le même ordre que celui dans lequel les articles (A) ont été reçus du convoyeur de ramassage (2), et dans laquelle le convoyeur de ramassage (2) est configuré pour transférer les articles (A) vers le tampon de convoyeur (4) dans le même ordre que celui suivi par les articles (A) dans le flux ordonné (F) d'articles (A) avant d'être ramassés.

9. Unité (1) selon une ou plusieurs des revendications précédentes, dans laquelle le tampon de transport (4) comporte des parois de guidage parallèles (4c) définissant au moins un canal de guidage d'épaisseur de préférence constante pour une succession respective d'articles (A), et dans laquelle l'épaisseur est telle qu'elle permet aux articles (A) d'être disposés en une seule rangée parallèle aux parois de guidage (4c), et approchant de préférence par excès une dimension transversale - ou diamètre - des articles (A).

10. Unité (1) selon une ou plusieurs des revendications précédentes, comprenant en outre un convoyeur intermédiaire (3), spécifiquement sous la forme d'un tambour, pourvu de sièges d'aspiration (3a) et définissant un tronçon du trajet d'alimentation du flux ordonné (F) d'articles (A), dans laquelle le convoyeur de ramassage (2) est disposé dans une position tangente au convoyeur intermédiaire (3) au niveau d'une zone de ramassage et dans laquelle le convoyeur intermédiaire (3) est pourvu d'un dispositif d'arrêt d'aspiration (3b) fonctionnant dans la zone de ramassage pour arrêter de manière commandée l'aspiration dans les sièges d'aspiration (3a) du convoyeur intermédiaire (3) dans la zone de ramassage.

11. Unité (1) selon une ou plusieurs des revendications précédentes, dans laquelle le dispositif de transport (6) comprend un dispositif de transfert pneumatique (6a) configuré pour alimenter longitudinalement les articles en forme de tige (A).

12. Unité (1) selon une ou plusieurs des revendications précédentes, dans laquelle le convoyeur de ramassage (2), le tampon de convoyeur (4) et le dispositif de libération (5) sont configurés pour déplacer les articles en forme de tige (A) transversalement.

13. Procédé de ramassage et de transport d'articles en forme de tige (A) de l'industrie du tabac, de préférence mis en œuvre par une unité (1) selon une ou plusieurs des revendications précédentes, comprenant les étapes suivantes :
- préparer un flux ordonné (F) d'articles en forme de tige (A) de l'industrie du tabac avançant transversalement à leurs axes longitudinaux ;
- ramasser une succession ordonnée d'articles (A) à partir du flux ordonné (F) ;
- alimenter temporairement la succession ordonnée vers un tampon de convoyeur (4) au niveau d'une section d'entrée (4a) du tampon de convoyeur (4) ;
- libérer de manière séquentielle du tampon de convoyeur (4), de manière commandée, l'article unitaire (A) le plus en aval dans la succession au niveau d'une section de sortie (4b) du tampon de convoyeur (4) et retenir le reste des articles (A) dans le tampon de convoyeur (4) ;
- envoyer les articles unitaires (A) libérés du tampon de convoyeur (4) à un poste d'inspection et/ou de traitement ;
dans lequel entre deux étapes successives de libérer, il y a une étape d'alimenter le reste des articles (A) dans le tampon de convoyeur (4) d'une quantité correspondant substantiellement à un article (A).

14. Procédé selon la revendication 13, dans lequel l'étape de libérer est effectuée à une cadence différente, en particulier à une cadence inférieure, à la cadence à laquelle les articles (A) sont ramassés à partir du flux ordonné (F) d'articles (A).

15. Procédé selon la revendication 13 ou 14, dans lequel l'étape de libérer est effectuée en déplaçant les articles (A) transversalement à leurs axes longitudinaux et dans lequel l'étape d'envoyer les articles (A) au poste d'inspection et/ou de traitement est effectuée en déplaçant les articles (A) le long de leurs axes longitudinaux, spécifiquement au moyen d'un dispositif de poussée pneumatique (6a).

16. Procédé selon l'une quelconque des revendications 13 à 15, dans lequel l'étape de libérer de manière séquentielle est effectuée en commandant automatiquement ou manuellement chaque libération d'un article unitaire de la succession ordonnée.
